# EUROPÄISCHE PATENTSCHRIFT

(11) **EP 0 415 046 B1**
(45) Veröffentlichungstag und Bekanntmachung des Hinweises auf die Patenterteilung: **06.10.1993**
(21) Anmeldenummer: 90113401.5
(22) Anmeldetag: 13.07.1990
(51) Int. Cl.: F16J 15/00, F16K 31/122

(54) **Hydraulischer Stellantrieb**
Hydraulic drive device
Dispositif d'entraînement hydraulique

(30) Priorität: 01.09.1989 CH 3180/89
(43) Veröffentlichungstag der Anmeldung: 06.03.1991
(73) Patentinhaber: ASEA BROWN BOVERI AG, 5400 Baden (CH)
(72) Erfinder: Frey, Heinz, CH-5737 Menziken (CH); Prochazka, Kamil, CH-8116 Würenlos (CH)

(56) Entgegenhaltungen:
- EP-A- 0 149 908
- CH-A- 651 900
- US-A- 3 379 405
- US-A- 4 601 457
- US-A- 4 744 386

## Beschreibung

### Technisches Gebiet

Die Erfindung geht aus von einem hydraulischen Stellantrieb für die Betätigung eines Ventils. Der Stellantrieb weist ein mit Hochdrucköl beaufschlagtes und von einem Antriebskolben begrenztes Antriebsvolumen auf. Ein Federelement wirkt entgegengesetzt zum Hochdrucköl auf den Antriebskolben ein.

### Stand der Technik

Es sind derartige hydraulische Stellantriebe für die Betätigung von Ventilen in Kraftwerken bekannt, die mit Hochdrucköl betätigt werden und die durch ein eingebautes Federelement wieder in die Ausgangslage zurückbewegt werden, wenn der Druck des Hochdrucköls nachlässt bzw. wenn das Hochdrucköl abgepumpt wird. In der Regel sind dabei im Stellantrieb das Antriebsvolumen und das Federelement hintereinander auf einer gemeinsamen Achse angeordnet. Diese Bauform benötigt vergleichsweise viel Platz in axialer Richtung. Zudem grenzt das Antriebsvolumen mindestens einseitig an die Umgebungsluft, sodass bei einem Dichtungsschaden Hochdrucköl aus dem Antriebsvolumen austreten und die Umwelt gefährden kann. So können beispielsweise Brände durch auf heisse Teile spritzendes Hochdrucköl ausgelöst werden.

### Darstellung der Erfindung

Hier will die Erfindung Abhilfe schaffen. Die Erfindung, wie sie in den Ansprüchen gekennzeichnet ist, löst die Aufgabe, einen hydraulischen Stellantrieb zu schaffen, bei welchem aus dem Antriebsvolumen austretendes Hochdrucköl keine Folgeschäden verursachen kann.

Die durch die Erfindung erreichten Vorteile sind im wesentlichen darin zu sehen, dass der hydraulische Stellantrieb sicherer zu betreiben ist. Zusätzliche Schilde, welchen gegen eventuell austretendes Hochdrucköl schützen können, werden hier nicht benötigt. Der hydraulische Stellantrieb kann vergleichsweise kompakt gebaut werden, was sich auch auf seine Wirtschaftlichkeit positiv auswirkt.

Die weiteren Ausgestaltungen der Erfindung sind Gegenstände der abhängigen Ansprüche.

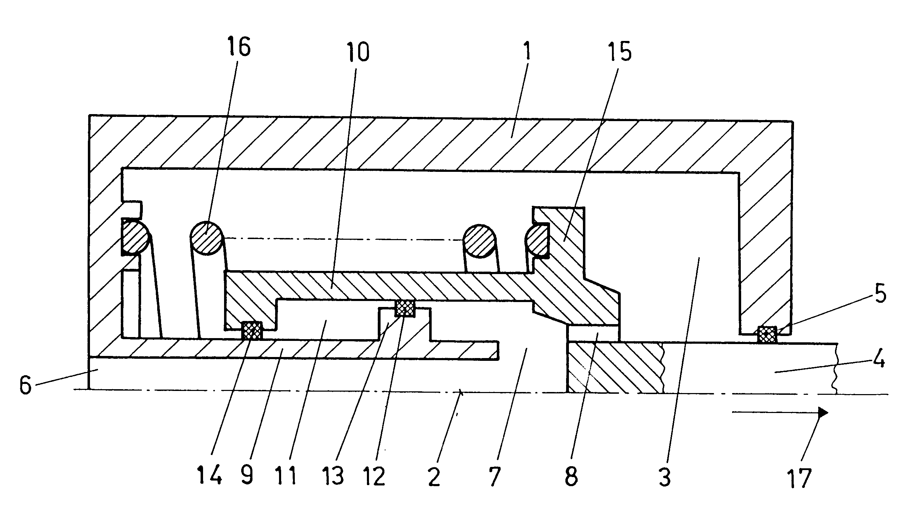

Die Erfindung, ihre Weiterbildung und die damit erzielbaren Vorteile werden nachstehend anhand der Zeichnung, welche lediglich einen Ausführungsweg darstellt, näher erläutert.

### Kurze Beschreibung der Zeichnung

Die einzige Figur zeigt einen Teilschnitt durch eine Ausführungsform eines erfindungsgemässen hydraulischen Stellantriebs. Die Darstellung ist stark vereinfacht.

### Wege zur Ausführung der Erfindung

In der Erfindung ist eine Prinzipskizze eines hydraulischen Stellantriebs dargestellt. Seine notwendigerweise vorhandenen Befestigungselemente sind nicht dargestellt ebensowenig wie die Hydraulikzuleitungen und etwaige elektrohydraulische Betätigungselemente für den Stellantrieb wie z.B. Proportionalventile. Ferner ist die üblicherweise vorhandene Hubüberwachung des Stellantriebs ebenfalls nicht dargestellt. Ein Gehäuse 1 schliesst den hydraulischen Stellantrieb nach aussen ab. Dieses Gehäuse 1 ist im wesentlichen zylindrisch entlang einer Längsachse 2 erstreckt ausgebildet und weist einen mit Niederdrucköl aufgefüllten Innenraum 3 auf. Auf seiner rechten Seite wird das Gehäuse 1 von einer Ventilstange 4 durchdrungen. Eine Dichtung 5 dichtet den Innenraum 3 gegen die Umgebung ab. In das Gehäuse 1 führt auf der linken Seite eine zentrale Bohrung 6, durch welche das Niederdrucköl zu und abgeführt wird. Die Bohrung 6 führt in ein Zwischenvolumen 7, welches durch eine Öffnung 8 mit dem Innenraum 3 verbunden ist.

Die Bohrung 6 weist eine Wand 9 auf, deren dem Innenraum 3 zugewandte Seite als Führung für einen Antriebskolben 10 und gleichzeitig als eine Wand eines Antriebsvolumens 11 dient. Ein auf die Wand 9 aufgesetzter und mit einer Dichtung 12 versehener Bund 13 schliesst das Antriebsvolumen 11 gegen das Zwischenvolumen 7 ab und führt gleichzeitig den Antriebskolben 10. Der Antriebskolben 10 ist mit einer Dichtung 14 versehen, welche das Antriebsvolumen 11 gegen den Innenraum 3 abdichtet. Der Antriebskolben 10 ist über einen Federteller 15 mit der Ventilstange 4 verbunden; die Trennstellen dieser Baugruppe sind nicht dargestellt. Der Federteller 15 erstreckt sich in den Innenraum 3. Er weist eine Aufnahme für eine Spiralfeder 16 auf, deren anderes Ende sich gegen die linke Seite des Gehäuses 1 abstützt. Die Spiralfeder 16 will den Federteller 15 in Richtung eines Pfeiles 17 nach rechts drücken. Das Antriebsvolumen 11 liegt im Bereich innerhalb der Spiralfeder 16; die Längsachse 2 stellt die zentrale Achse für beide Elemente dar. Das Antriebsvolumen wird über mindestens einen, nicht dargestellten, in die Wand 9 eingelassenen Kanal mit Hochdrucköl beaufschlagt.

Zur Erläuterung der Wirkungsweise sei die Figur näher betrachtet. Im Ruhezustand, wenn kein nennenswerter Druck das Antriebsvolumen 11 beaufschlagt, drückt die Spiralfeder 16 die Ventilstange 4 nach rechts in Richtung des Pfeiles 17. Das über diese Ventilstange 4 betätigte Ventil ist dann geschlossen. Diese Stellung kann auch als fail safe-Stellung bezeichnet werden. Wird das Antriebsvolumen 11 mit Hochdrucköl beaufschlagt, so bewegt sich der Antriebskolben 10 und mit ihm die Ventilstange 4 nach links, das Ventil wird geöffnet. Das Hochdrucköl weist einen Druck im Bereich von 100 bis 200 bar auf. Mit der Menge des zugeführten Hochdrucköls wird der Hub des Stellantriebes geregelt. Die Dichtungen 12 und 14, welche das Antriebsvolumen 11 abdichten gegenüber den mit Niederdrucköl gefüllten, als Sicherheitsvolumen dienenden benachbarten Volumina, nämlich gegenüber dem Zwischenvolumen 7 und dem Innenraum 3, sind hochbeansprucht, sodass ein Versagen dieser Dichtungen 12 und 14 nie ganz ausgeschlossen werden kann.

Ein derartiges Versagen verursacht hier jedoch keine Folgeschäden, da das aus dem Antriebsvolumen 11 entweichende Hochdrucköl im Sicherheitsvolumen aufgefangen wird. Der Druck des Niederdrucköls im Sicherheitsvolumen, welcher beispielsweise im Normalfall 5 bar beträgt, wird durch das hinzutretende Hochdrucköl auf maximal 7 bis 8 bar angehoben. Die Dimensionen der Dichtungsspalte, durch die das Hochdrucköl im Fehlerfall austritt, begrenzen diesen Ölstrom, sodass im Sicherheitsvolumen kein zu hoher Druck auftreten kann. Zudem ist das Sicherheitsvolumen grösser ausgebildet als das Antriebsvolumen 11, sodass auch hier eine gewisse redundante Sicherheit eingebaut ist. Das Sicherheitsvolumen ist etwa zehn- bis fünfzigfach grösser ausgebildet als das Antriebsvolumen 11, sodass mit grosser Sicherheit Druckstösse, die von austretendem Hochdrucköl herrühren, abgeflacht werden auf ungefährliche Werte. Nachströmendes Hochdrucköl kann ebenfalls keine unzulässige Druckerhöhung im Sicherheitsvolumen verursachen, da die an der Bohrung 6 angeschlossenen Leitungen für das Niederdrucköl einen hinreichend grossen Querschnitt aufweisen, um mögliche Druckerhöhungen abführen zu können.

Die konzentrische Anordnung des Antriebsvolumens 11 innerhalb der Spiralfeder 16 ermöglicht eine gedrängte und kompakte Bauart des Stellantriebs. Das vorhandene Sicherheitsvolumen kann vorteilhaft gleichzeitig auch als Raum für die Spiralfeder 16 genutzt werden. Je nach Bedarf können statt der Spiralfeder 16 auch Tellerfedern, die als Paket geschichtet werden, eingesetzt werden. Ferner ist auch eine Kombination von Tellerfedern mit Spiralfedern möglich, sodass die Federcharakteristik an die Betriebsanforderungen des Stellantriebes angepasst werden kann.

Bei diesem Stellantrieb kann kein Hochdrucköl in die umgebende Atmosphäre gelangen, wenn ein Dichtungsdefekt auftreten sollte. Damit werden Folgeschäden wie Brände, Verletzungen und Verschmutzung der Anlage vermieden. Die Betriebssicherheit eines solchen Stellantriebes ist wesentlich erhöht. Zudem lässt sich der Stellantrieb vorteilhaft kompakt bauen, was seine Wirtschaftlichkeit steigert.

## Patentansprüche

1. Hydraulischer Stellantrieb für die Betätigung eines Ventils mit einem mit Hochdrucköl beaufschlagten, von einem Antriebskolben (10) begrenzten Antriebsvolumen (11) und einem auf den Antriebskolben (10) entgegengesetzt zum Hochdrucköl einwirkenden Federelement,
dadurch gekennzeichnet,
- dass das Antriebsvolumen (11) vollständig von einem mit Niederdrucköl gefüllten Sicherheitsvolumen umgeben ist.

2. Hydraulischer Stellantrieb nach Anspruch 1,
dadurch gekennzeichnet,
- dass das Antriebsvolumen (11) und das Federelement konzentrisch angeordnet sind, wobei das Federelement das Antriebsvolumen (11) konzentrisch umgibt.

3. Hydraulischer Stellantrieb nach mindestens einem der voranstehenden Ansprüche,
dadurch gekennzeichnet,
- dass als Federelement ein Tellerfedernpaket oder eine Spiralfeder (16) oder eine Kombination beider erwähnter Federarten vorgesehen ist.

4. Hydraulischer Stellantrieb nach einem der voranstehenden Ansprüche,
dadurch gekennzeichnet,
- dass das Sicherheitsvolumen grösser ausgebildet ist als das Antriebsvolumen (11).

5. Hydraulischer Stellantrieb nach Anspruch 4,
dadurch gekennzeichnet,
- dass das Sicherheitsvolumen zehn- bis fünfzigfach grösser ausgebildet ist als das Antriebsvolumen (11).

## Claims

1. Hydraulic actuator for actuating a valve, having a drive volume (11) pressurised by extreme-pressure oil and bounded by a drive piston (10), and having a spring element acting upon the drive piston (10) in a manner opposing the extreme-pressure oil, characterised in that the drive volume (11) is completely surrounded by a safety volume filled with low-pressure oil.

2. Hydraulic actuator according to Claim 1, characterised in that the drive volume (11) and the spring element are arranged concentrically, the spring element concentrically surrounding the drive volume (11).

3. Hydraulic actuator according to at least one of the preceding claims, characterised in that a disk spring bank or a spiral spring (16) or a combination of the two types of spring mentioned is provided as the spring element.

4. Hydraulic actuator according to one of the preceding claims, characterised in that the safety volume is constructed larger than the drive volume (11).

5. Hydraulic actuator according to Claim 4, characterised in that the safety volume is constructed ten to fifty times larger than the drive volume (11).

## Revendications

1. Servomoteur hydraulique pour la commande d'une soupape avec un volume de commande (11) contenant de l'huile à haute pression et délimité par un piston de commande (10) et un élément de ressort agissant sur le piston de commande (10) dans le sens opposé à l'huile à haute pression, caractérisé en ce que
- le volume de commande (11) est entièrement entouré par un volume de sécurité rempli d'huile à basse pression.

2. Servomoteur hydraulique suivant la revendication 1, caractérisé en ce que
- le volume de commande (11) et l'élément de ressort sont disposés concentriquement, l'élément de ressort entourant concentriquement le volume de commande (11).

3. Servomoteur hydraulique suivant au moins une des revendications précédentes, caractérisé en ce que
- comme élément de ressort, il est prévu un paquet de rondelles élastiques ou un ressort hélicoïdal (16) ou une combinaison des deux types de ressorts précités.

4. Servomoteur hydraulique suivant une des revendications précédentes, caractérisé en ce que
- le volume de sécurité est plus grand que le volume de commande (11).

5. Servomoteur hydraulique suivant la revendication 4, caractérisé en ce que
- le volume de sécurité est dix à cinquante fois plus grand que le volume de commande (11).
